(19) Europäisches Patentamt

**European Patent Office**

**Office européen des brevets**

(11) Veröffentlichungsnummer:

# 0 024 300
## A1

⑫ # EUROPÄISCHE PATENTANMELDUNG

㉑ Anmeldenummer: **80104108.8**

㉒ Anmeldetag: **15.07.80**

(51) Int. Cl.³: **H 02 P 7/28**

(30) Priorität: **30.07.79 DE 2930920**

㊸ Veröffentlichungstag der Anmeldung: **04.03.81**
**Patentblatt 81/9**

㉘ Benannte Vertragsstaaten: **CH DE FR GB IT LI**

㉛ Anmelder: **SIEMENS AKTIENGESELLSCHAFT Berlin und München, Postfach 22 02 61, D-8000 München 22 (DE)**

㉒ Erfinder: **Siebert, Jürgen, Dr., Mühlweg 31, D-8521 Uttenreuth (DE)**

㊋ Verfahren zur Pulsbreitensteuerung eines Gieichstrom-Umkehrstellers und Schaltungsanordnung zur Durchführung des Verfahrens.

㊔ Die Erfindung betrifft ein Verfahren zur Pulsbreitensteuerung eines Gleichstrom-Umkehrstellers mit vier elektronischen Schaltern (1 bis 4) in Brückenschaltung zur Versorgung einer in der Brückendiagonale liegenden ohmisch-induktiven Last (5) und eine Schaltungsanordnung zur Durchführung des Verfahrens. Dabei soll die Welligkeit des Laststroms gering und die Steuerkennlinie linear sein. Bei jeder Richtung des Laststromes werden jeweils zwei in der Brückenschaltung diagonal gegenüberliegende elektronische Schalter (1, 3) bzw. (2, 4) zeitlich versetzt periodisch getaktet. Eine Schaltungsanordnung zur Durchführung des Verfahrens enthält eine Polaritätserfassungsstufe (17) zur Erfassung der Polarität der Steuerspannung ($U_{St}$). Die Polaritätserfassungsstufe ist über ein erstes Einschalt-Verzögerungsglied (18) mit Verriegelungsstufen (13, 15) für den ersten und dritten elektronischen Schalter (1, 3) und über eine Invertierstufe (20) und ein zweites Einschalt-Verzögerungsglied (19) mit Verriegelungsstufen (14, 16) des zweiten und vierten elektronischen Schalters (2, 4) verbunden. Damit wird eine Pausenzeit in der Ansteuerung der elektronischen Schalter (1 bis 4) bei Polaritätswechsel der Steuerspannung ($U_{St}$) erreicht. Der erfindungsgemäße Gleichstrom-Umkehrsteller eignet sich beispielsweise zur Steuerung von Gleichstrommotoren.

SIEMENS AKTIENGESELLSCHAFT    Unser Zeichen
Berlin und München    VPA **79 P 3 1 3 5** EUR

Verfahren zur Pulsbreitensteuerung eines Gleichstrom-
Umkehrstellers und Schaltungsanordnung zur Durchführung
des Verfahrens

Die Erfindung betrifft ein Verfahren zur Pulsbreitensteuerung eines Gleichstrom-Umkehrstellers mit vier
elektronischen Schaltern in Brückenschaltung zur Versorgung einer in der Brückendiagonale liegenden ohmisch-
induktiven Last, wobei bei jeder Richtung des Laststromes jeweils zwei in der Brückenschaltung diagonal gegenüberliegende elektronische Schalter periodisch getaktet
werden und eine Schaltungsanordnung zur Durchführung
des Verfahrens.

Ein derartiges Verfahren und eine Schaltungsanordnung
zur Durchführung des Verfahrens sind beispielsweise aus
der "Siemens-Zeitschrift" 43 (1969) Heft 5, Seite 458
bis 464 bekannt. Dabei werden zwei in der Brückenschaltung diagonal gegenüberliegende elektronische Schalter
gleichzeitig periodisch geschlossen und geöffnet,
während die beiden anderen Schalter geöffnet bleiben.
Soll sich die Richtung des Laststroms umkehren, so werden die Transistoren der zweiten Brückendiagonale

Sid 2 Kgm / 08.06.1979

angesteuert, während die der ersten Brückendiagonale gesperrt bleiben. Dieses Verfahren hat den Vorteil, daß die Steuerkennlinie, d. h. der Zusammenhang zwischen Steuerspannung und Lastspannung liniear ist. Außerdem ist die Ansteuerung recht einfach. Nachteilig ist jedoch, daß die Lastspannung und der in die Brückenschaltung eingespeiste Strom während der Öffnungzeiten der periodisch angesteuerten elektronischen Schalter ihr Vorzeichen ändern. Während der Öffnungszeit dieser Schalter fließt der durch die Lastinduktivität aufrechterhaltene Strom nämlich über Freilaufdioden, die parallel zu jedem elektronischen Schalter liegen, in die Versorgungsspannungsquelle zurück, wobei sich die Richtung des Versorgungsstroms umkehrt. Damit ist gleichzeitig eine Spannungsumkehr an der Last verbunden. Die Welligkeit des Laststroms ist daher bei diesen Verfahren relativ groß. Durch den Wechselstromanteil des Laststroms entstehen in der Last zusätzlich Verluste, die in Wärme umgesetzt werden. Bei Motoren als Last kann z. B. der hohe Wechselstromanteil zu Pfeifgeräuschen führen.

Eine kleinere Welligkeit des Laststroms wird mit einem Verfahren zur Pulsbreitensteuerung erreicht, das aus der US-PS 3 260 912 bekannt ist. Dabei werden zwei in der Brückenschaltung diagonal gegenüberliegende elektronische Schalter zeitlich versetzt angesteuert. Außerdem wird während der Öffnungszeit jedes elektronischen Schalters der mit diesem in demselben Brückenzweig liegende elektronische Schalter geschlossen. Dabei ergibt sich der Vorteil, daß der Strom, der bei Abtrennen der Last von der Versorgungsspannung durch die Lastinduktivität weitergetrieben wird, nicht in die Versorgungsspannung zurückfließt, sondern über einen jeweils geschlossenen elektronischen Schalter und eine Freilaufdiode zirkulieren kann. Dabei tritt also nach jeder Phase der Energiezufuhr aus der Versorgungsspannung stets eine Phase des Freilaufs und nicht wie bei dem vorher genannten Verfahren eine Phase des Rücklaufs auf. Die Motorspannung kehrt sich dabei nicht mehr um, sondern wird zu Null. Die Welligkeit des Motorstromes hat daher bei gleicher Pulsfrequenz nur die Hälfte des Werts, der bei der vorher erläuterten Schaltung auftritt. Auch das Steuerverfahren ist sehr einfach, da stets alle elektronischen Schalter angesteuert werden und auch bei Umkehr des Laststroms lediglich das Einschaltverhältnis der elektronischen Schalter geändert wird. Nachteilig ist jedoch die Nichtlinearität der Steuerkennlinie, d. h. des Zusammenhangs zwischen Steuerspannung und Lastspannung im Bereich kleiner Steuerspannungen. Um einen Brückenkurzschluß sicher zu verhindern, muß nämlich zwischen den Einschaltimpulsen für die in derselben Brückenhälfte liegenden elektronischen Schalter jeweils eine Sicherheitszeit eingehalten werden. Bei Verringerung der Steuerspannung kommt man zu einem Wert, bei dem sich die Stromflußzeiten diagonal gegenüberliegender elektronischer Schalter wegen der Sicherheitszeiten nicht mehr überlappen. Die Lastspannung wird dabei Null, bevor die Steuerspannung Null wird. Bei negativen Werten für die Steuerspannung tritt wegen der Sicherheitszeiten erst dann wieder eine Überlappung der Einschaltzeiten diagonal gegenüberliegender Transistoren auf, wenn die Steuerspannung einen bestimmten negativen Wert überschreitet. Die Steuerkennlinie eines nach dem genannten Verfahren betriebenen Gleichstrom-Umkehrstellers weist also im Bereich kleiner Steuerspannungen einen Unempfindlichkeitsbereich auf, in dem die Lastspannung Null ist. Ein derartiges Verhalten erweist sich jedoch für die meisten Anwendungsfälle als entscheidender Nachteil. Die während der Öffnungszeit der elektronischen Schalter der ersten Brückendiagonale geschlossenen elektronischen Schalter der zweiten Brückendiagonale führen keinen Strom, dieser fließt vielmehr durch die parallelgeschalteten Freilaufdioden. Die an den Freilaufdioden anstehende Durchlaßspannung ist in Sperrrichtung der Transistoren gepolt, was u. U. zu einer Beschädigung der Transistoren führen kann. Da die Transistoren keinen Strom führen, sind die Speicherzeiten besonders lang, so daß auch die Sicherheitszeiten entsprechend lang gewählt werden müssen.

Aufgabe der Erfindung ist es daher, ein Verfahren der eingangs genannten Art so auszugestalten, daß die Welligkeit des Laststroms gering und die Steuerkennlinie linear ist.

Diese Aufgabe wird erfindungsgemäß dadurch gelöst, daß die diagonal gegenüberliegenden elektronischen Schalter zeitlich versetzt getaktet werden.

Beim erfindungsgemäßen Verfahren folgt nach jeder Phase der Energieeinspeisung eine Phase des Freilaufs über einen elektronischen Schalter und eine Freilaufdiode, so daß keine Umkehr des Zwischenkreisstroms und der Lastspannung erfolgt. Der Laststrom weist daher gegenüber Gleichstrom-Umkehrstellern mit Umkehr des Zwischenkreisstroms und der Lastspannung nur die halbe Welligkeit auf. Da bei jeder Richtung des Laststroms nur zwei diagonal gegenüberliegende elektronische Schalter angesteuert werden, ist kein Brückenkurzschluß durch Überlappung der Einschaltimpulse möglich, so daß keine Sicherheitszeit zwischen den Einschaltimpulsen eingehalten werden muß. Dadurch ergibt sich eine lineare Steuerkennlinie ohne Unempfindlichkeitsbereich bei kleinen Steuerspannungen. Lediglich bei Wechsel der Polarität des Laststroms, d. h. bei Übergang der Steuerung von zwei diagonal gegenüberliegenden elektronischen Schaltern zu den beiden anderen diagonal gegenüberliegenden Schaltern muß eine Pausenzeit eingehalten werden. Damit wird sichergestellt, daß nicht zwei zwischen den Polen der Versorgungsspannungsquelle liegende elektronische Schalter gleichzeitig eingeschaltet werden. Diese Pausenzeit wirkt sich jedoch nicht störend aus, insbesondere da sie im Vergleich zur statistischen Totzeit des Gleichstromstellers vernachlässigbar klein ist. Die statistische Totzeit ergibt sich aus der Tatsache, daß ein Wechsel der Polarität des Steuerstroms erst mit dem auf den Polaritätswechsel der Steuerspannung folgenden Steuerimpuls möglich ist. Da bei jeder Stromrichtung nur zwei elektronische Schalter angesteuert werden, sind der Energiebedarf für die Ansteuerung und die in den elektronischen Schaltern auftretenden Ansteuerverluste niedrig.

Bei einer Schaltungsanordnung zur Durchführung des erfindungsgemäßen Verfahrens mit vier elektronischen Schaltern in Brückenschaltung und einer in der Brückendiagonale liegenden ohmisch-induktiven Last, bei der jeder elektronische Schalter von einer Freilaufdiode überbrückt ist, bei der die Pulsbreitensteuerung durch eine Ansteuereinrichtung in Abhängigkeit von einer Steuerspannung erfolgt, bei der bei positiver Steuerspannung der erste und der zu diesem in der Brückenschaltung diagonal angeordnete dritte elektronische Schalter und bei negativer Steuerspannung der zweite und der vierte elektronische Schalter periodisch getaktet werden und bei der die nicht getakteten elektronischen Schalter gesperrt sind, ist vorteilhafterweise zwischen Ansteuereinrichtung und jedem elektronischen Schalter je eine Verriegelungsstufe angeordnet, wobei die Steuerspannung dem Eingang einer Polaritätserfassungsstufe zugeführt ist, die bei positiver Steuerspannung ein Signal abgibt und wobei die Polaritätserfassungsstufe über ein erstes Einschalt-Verzögerungsglied mit den Verriegelungseingängen der Verriegelungsstufen des ersten und dritten elektronischen Schalters und über eine Invertierstufe und ein zweites Einschalt-Verzögerungsglied mit den Verriegelungseingängen der Verriegelungsstufen des zweiten und vierten elektronischen Schalters verbunden ist. Bei Wechsel der Polarität der Steuerspannung werden dabei die Ansteuersignale für den ersten und dritten elektronischen Schalter unverzögert gesperrt, während die Ansteuersignale für den zweiten und vierten elektronischen Schalter erst nach einer Verzögerungszeit freigegeben werden. Damit wird die Pausenzeit der Ansteuerimpulse bei Polaritätswechsel sichergestellt.

Zweckmäßigerweise ist jede Verriegelungsstufe ein UND-Gatter und die Polaritätserfassungsstufe ein im Übersteuerungsbereich betriebener Operationsverstärker.

Jedes Einschaltverzögerungsglied kann zwischen seinem Eingang und dem Bezugspotential der Schaltungsanordnung die Reihenschaltung einer Diode und eines Kondensators aufweisen, wobei die Diode bei positivem Eingangssignal in Sperrichtung gepolt ist und der Verbindungspunkt zwischen Diode und Kondensator, der zugleich den Ausgang des Verzögerungsgliedes darstellt, kann über einen Widerstand mit der Versorgungsspannung verbunden sein. Damit ist das Einschaltverzögerungsglied auf einfache Weise realisiert.

Vorteilhafterweise werden einem Dreieckgenerator zwei Vergleicherstufen nachgeschaltet, denen die Steuerspannung als Referenzspannung zugeführt ist, wobei die erste Vergleicherstufe ein Signal abgibt, wenn die Ausgangsspannung des Dreieckgenerators unter der Steuerspannung liegt und die zweite Vergleicherstufe ein Signal abgibt, wenn die Ausgangsspannung des Dreieckgenerators über der invertierten Steuerspannung liegt, wobei der Ausgang der ersten Vergleicherstufe mit dem Signaleingang der Verriegelungsstufe des ersten elektronischen Schalters und über ein Invertierglied mit dem Signaleingang der Verriegelungsstufe des zweiten elektronischen Schalters verbunden ist und wobei der Ausgang der zweiten Vergleicherstufe mit dem Signaleingang der Verriegelungsstufe des dritten elektronischen Schalters und über ein Invertierglied mit dem Signaleingang der Verriegelungsstufe des vierten elektronischen Schalters verbunden ist. Durch Vergleich der Ausgangsspannung des Dreieckgenerators mit der Steuerspannung werden zwei gegeneinander versetzte Impulsfolgen erzeugt, wobei die Pulsbreite jeweils von der Höhe der Steuerspannung abhängt. Über die Verriegelungsstufen werden die Impulsfolgen in Abhängigkeit von der Polarität der Steuerspannung jeweils den richtigen elektronischen Schaltern zugeführt.

Zweckmäßigerweise sind die erste und zweite Vergleicherstufe ein erster und zweiter im Übersteuerungsbereich betriebener Operationsverstärker, wobei dem nichtinvertierenden Eingang des ersten Operationsverstärkers die Steuerspannung, dem invertierenden Eingang des ersten Operationsverstärkers die Ausgangsspannung des Dreieckgenerators, dem nichtinvertierenden Eingang des zweiten Operationsverstärkers die Ausgangsspannung des Dreieckgenerators und dem invertierenden Eingang des zweiten Operationsverstärkers die invertierte Steuerspannung zugeführt ist. Damit können die beiden Vergleicherstufen auf einfache Weise realisiert werden.

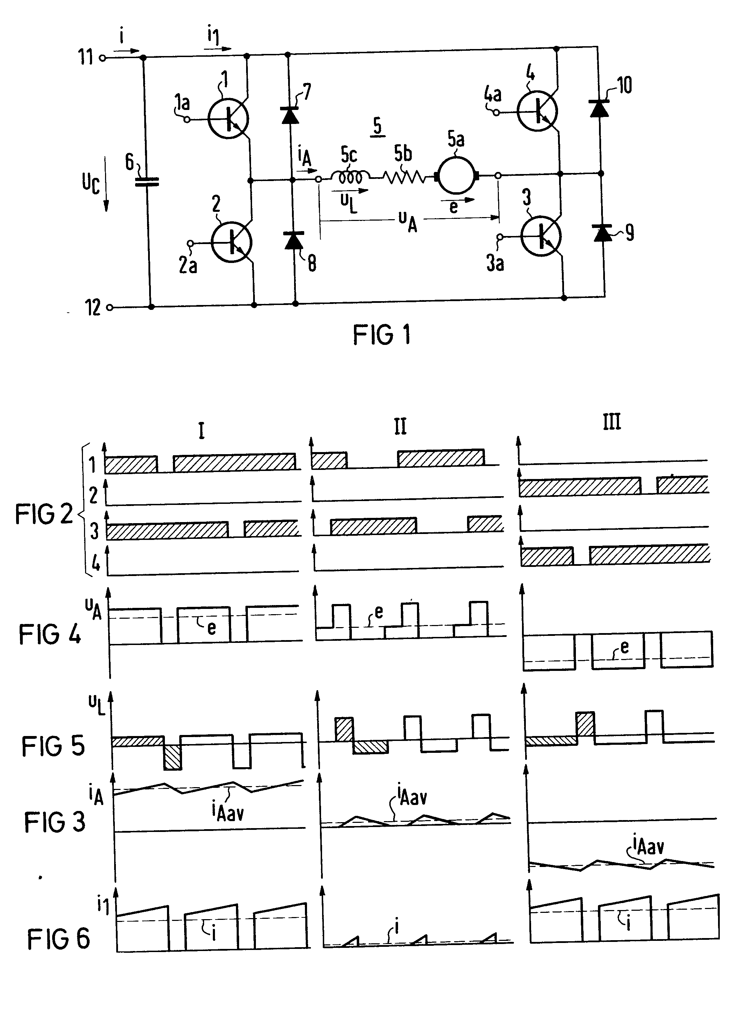

Das erfindungsgemäße Verfahren sowie eine Schaltungsanordnung zur Durchführung des Verfahrens werden im folgenden anhand der Figuren 1 bis 6 beispielhaft näher
erläutert. Dabei sind in den einzelnen Figuren gleiche
Bauteile mit gleichen Bezugszeichen versehen.

Fig. 1 zeigt die Grundschaltung des Leistungsteils eines
Gleichstrom-Umkehrstellers. Dabei sind vier Transistoren
1 bis 4 als elektronische Schalter in Brückenschaltung
zwischen zwei Klemmen 11 und 12 angeordnet. An den
Klemmen 11 und 12 steht eine Versorgungs-Gleichspannung
$U_C$ an. Zwischen den Klemmen 11 und 12 liegt ein Kondensator 6, der als Energiespeicher dient und Stromstöße
aufnimmt bzw. abgibt. Jeder Transistor 1 bis 4 ist mit
einer Freilaufdiode 7 bis 10 überbrückt, die entgegengesetzt zur Durchlaßrichtung des zugeordneten Transistors
gepolt ist. Diagonal in der Brückenschaltung ist zwischen dem Verbindungspunkt der Transistoren 1 und 2 und
dem Verbindungspunkt der Transistoren 3 und 4 ein
Gleichstrommotor 5 als Last angeordnet. Der Gleichstrommotor 5 ist mit seinem Ersatzschaltbild mit Ankerinduktivität 5c und Ankerwiderstand 5b dargestellt.

Mit dieser Schaltungsanordnung ist ein Vierquadrantenbetrieb des Motors 5 möglich, d. h. der Motor 5 kann
sowohl im Rechtslauf als auch im Linkslauf angetrieben
als auch gebremst werden. Beim Bremsen kann der Motor 5
als Generator arbeiten und Leistung in die Versorgungsstromquelle zurückspeisen.

Das erfindungsgemäße Verfahren zur Pulsbreitensteuerung
eines in Fig. 1 dargestellten Gleichstrom-Umkehrstellers
ist in den Figuren 2 bis 6 dargestellt. Zur Erläuterung
der Funktionsweise sind hier nur die Betriebsfälle
"Treiben des Motors bei Rechtslauf" und "Treiben des Motors bei Linkslauf" im stationären Zustand dargestellt. Das dargestellte Verfahren läßt sich jedoch analog auch für den Bremsbetrieb anwenden.

Fig. 2 zeigt das Steuerimpulsraster für die Transistoren 1 bis 4,

Fig. 3 zeigt den Stromverlauf des Motorstromes $i_A$,

Fig. 4 zeigt den Spannungsverlauf der Motor-Klemmenspannung $u_A$, wobei die in der Ankerwicklung induzierte Spannung e gestrichelt eingezeichnet ist,

Fig. 5 zeigt den Verlauf der Spannung $u_L$ an der Ankerinduktivität 5c des Motors 5 und

Fig. 6 zeigt den Verlauf des in die Brückenschaltung der Transistoren 1 bis 4 eingespeisten Stromes $i_1$.

Dabei fließt bei den unter I und II dargestellten Steuerimpulsrastern der Motorstrom $i_A$ in positiver Richtung, d. h. der Motor 5 wird im Rechtslauf angetrieben. Beim Steuerimpulsraster I ist der Motorstrom $i_A$ in der Nähe seines positiven Maximalwertes, beim Steuerimpulsraster II ist der Motorstrom $i_A$ verringert. Das Steuerimpulsraster III ergibt einen negativen Motorstrom $i_A$, der in der Nähe des negativen Maximalwertes liegt. Der Motor 5 wird dabei nach links angetrieben.

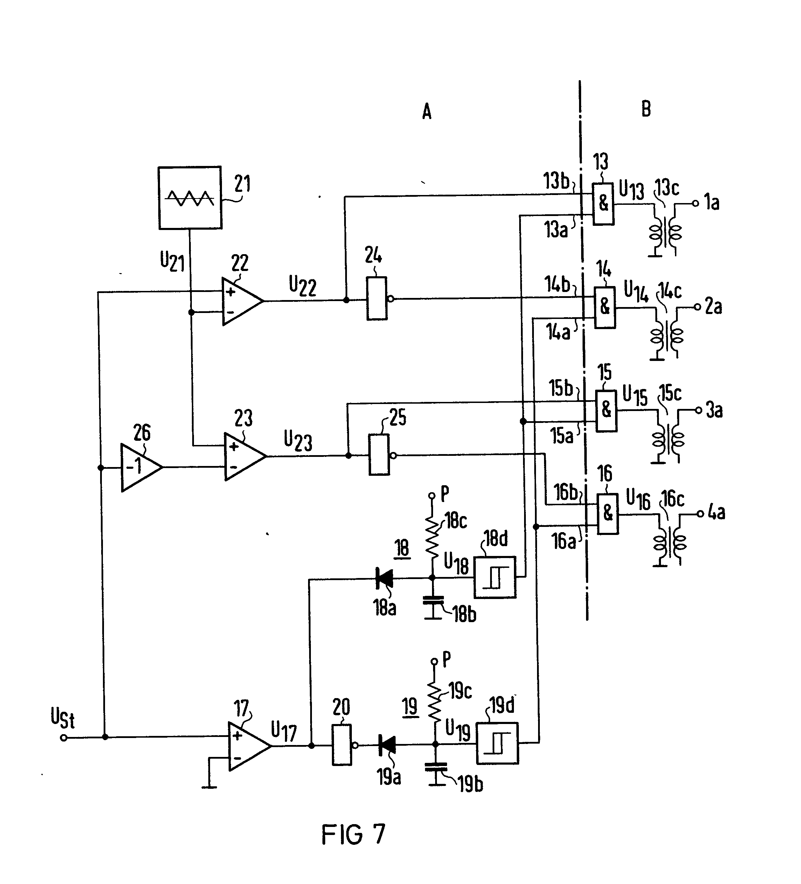

Wie Fig. 2 zeigt, sind beim Steuerimpulsraster I in einer ersten Steuerphase die Transistoren 1 und 3 gleichzeitig leitend. Wie Fig. 4 zeigt, steht dabei die volle Versorgungsspannung $U_C$ am Motor 5 an, wenn man die Spannungsabfälle an den leitenden Transistoren 1 und 3 vernachlässigt. Die am Motor 5 anstehende Spannung $u_A$ ruft einen in Fig. 3 dargestellten ansteigenden Strom $i_A$ hervor, wobei die Steigung von der Motorinduktivität 5c abhängt. Der Motorstrom $i_A$ ist in dieser Phase mit dem in Fig. 6 dargestellten, in die Brückenschaltung

fließenden Strom $i_1$ identisch. Wegen der Glättungswirkung des Kondensators 6 wird der Versorgungsspannungsquelle $U_C$ der in Fig. 5 gestrichelt dargestellte Mittelwert $i$ des Stromes $i_1$ entnommen. Fig. 5 zeigt den Verlauf der Spannung $u_L$ an der Motorinduktivität 5c, wobei diese Spannung $u_L$ in dieser ersten Steuerphase einem kleinen positiven Wert aufweist.

In einer anschließenden zweiten Steuerphase wird der Transistor 1 ausgeschaltet, während der Transistor 3 eingeschaltet bleibt. Der Motorstrom $i_A$ wird durch die Wirkung der Motorinduktivität 5c zunächst aufrechterhalten und fließt über die Freilaufdiode 8, den Motor 5 und den Transistor 3. Durch die in diesem Kreis auftretenden Verluste ist der Motorstrom $i_A$ in dieser Steuerphase abklingend. Da der Motor für diese Stromrichtung über den Transistor 3 und die Freilaufdiode 8 kurzgeschlossen ist, wird die Motorspannung $u_A$ in der zweiten Steuerphase Null. Die wegen der konstanten Motordrehzahl gleichbleibende induzierte Spannung $e$ wird durch die entgegengesetzte, in Fig. 5 dargestellte Spannung $u_L$ an der Induktivität 5c kompensiert. Der Strom $i_1$ ist während der zweiten Steuerphase Null. In der sich anschließenden dritten Steuerphase sind wieder die Transistoren 1 und 3 gleichzeitig leitend. Dabei ergeben sich dieselben Strom- und Spannungsverhältnisse wie in der ersten Steuerphase. In der vierten Steuerphase bleibt der Transistor 1 leitend, während der Transistor 3 gesperrt wird. Dabei fließt der von der Motorinduktivität 5c eingeprägte Strom über den Transistor 1 und die Freilaufdiode 10 weiter. Dabei ergeben sich dieselben Strom- und Spannungsverhältnisse wie bei der zweiten Steuerphase.

Beim Steuerimpulsraster I ist das Drehmoment bzw. die Drehzahl des Motors 5 relativ hoch, da die Überlappungszeit der Einschaltzeiten des Transistors 1 und 3 bzw. 2 und 4, während der eine Energiezufuhr zum Motor 5 erfolgt, relativ lang ist.

Beim Steuerdiagramm II ist die Einschaltdauer der Transistoren 1 bis 4 verkürzt. Damit ergibt sich auch eine kürzere Überlappungszeit, während der Energiezufuhr erfolgen kann. Die Drehzahl und damit auch die induzierte Spannung e des Motors 5 werden geringer. Wegen des geringeren Mittelwertes des Motorstroms $i_A$ wird dieser lückend, d. h. er sinkt in der Zeit, in der nur ein Transistor 1 oder 3 eingeschaltet ist, auf Null. Dabei wird auch die Spannung $u_L$ an der Motorinduktivität 5c Null, so daß am Motor 5 während der Lückzeit des Stromes $i_A$ die induzierte Spannung e ansteht, wie Fig. 4 zeigt. Diese Spannung wird nicht kurzgeschlossen, da sie in Sperrichtung der Freilaufdioden 7 bzw. 10 gepolt ist.

Das Steuerimpulsraster III stellt schließlich einen Betriebsfall dar, bei dem der Motor 5 mit hohem Moment bzw. hoher Drehzahl in die entgegengesetzte Richtung angetrieben wird. Dabei werden anstelle der Transistoren 1 und 3 die Transistoren 4 und 2 angesteuert. Der Verlauf von Strömen und Spannungen entspricht dabei dem des Steuerimpulsrasters I, wobei lediglich die Polaritäten umgekehrt sind. Während der Freilaufphasen erfolgt der Stromfluß über den Transistor 2 und die Freilaufdiode 9 bzw. über den Transistor 4 und die Freilaufdiode 7.

Mit dem erläuterten Verfahren ist es also möglich, einen Laststrom in beiden Richtungen stetig zu steuern. Solange die Einschaltdauer der Transistoren 1 und 3

0024300

größer ist als die Ausschaltdauer, tritt eine Überlappung der Einschaltzeiten auf und es fließt ein positiver Laststrom. Sobald die Einschaltdauer der Transistoren 1 und 3 gleich der Ausschaltdauer wird,ist
keine Überlappung der Einschaltzeiten mehr vorhanden
und der Strom wird zu Null. Ein Wechsel der Ansteuerung
von den Transistoren 1 und 3 auf die Transistoren 2 und
4 führt zu einer Richtungsänderung des Laststromes.
Da - ausgehend vom Laststrom Null - bereits eine kleine
Änderung der Einschaltdauer der Transistoren 1 und 3
bzw. 2 und 4 zu einem Anstieg des Laststromes führt,
tritt bei diesem Verfahren kein Unempfindlichkeitsbereich im Bereich des Laststromes Null auf. Es muß
lediglich beim Übergang der Ansteuerung von den Transistoren 1 und 3 auf die Transistoren 2 und 4 eine
Pausenzeit eingehalten werden, um zu verhindern, daß
die Transistoren 1 und 2 oder 3 und 4 gleichzeitig
eingeschaltet sind, was zu einem Kurzschluß der Versorgungsspannung führen würde. Diese Pausenzeit wirkt sich
im dynamischen Verhalten als Totzeit aus, die aber
wesentlich weniger störend ist als ein Unempfindlichkeitsbereich.

Wie Fig. 4 zeigt, wechselt beim Takten der Transistoren
1 bis 4 die Lastspannung $u_A$ nicht ihr Vorzeichen. Die
Welligkeit des Laststromes $i_A$ bleibt daher klein. Ein
Laststrom $i_A$ mit einem hohen Wechselstromanteil würde
zu erhöhten thermischen Verlusten in der Last 5 und
- insbesondere bei Motoren - in Abhängigkeit vom Frequenzbereich der Ansteuerung zu einem starken Pfeifgeräusch führen. Da bei dem erläuterten Betriebsverfahren
stets nur zwei Transistoren 1 und 3 bzw. 2 und 4 angesteuert werden, ist der Energiebedarf für die Ansteuerung gering.

Eine Ansteuereinheit A zur Ansteuerung des Leistungsteils entsprechend Fig. 1 nach dem beschriebenen Verfahren ist in Fig. 7 dargestellt. Die Ansteuerschaltung A enthält einen Dreieckgenerator 21, der Dreieckimpulse mit der Form eines gleichschenkligen Dreiecks symmetrisch zur Nullinie abgibt. Ein derartiger Dreieckgenerator ist beispielsweise aus "Halbleiter-Schaltungstechnik" von Tietze-Schenk, 3. Auflage, Seite 436 bekannt. Der Ausgang des Dreieckgenerators 21 ist mit dem invertierenden Eingang des Operationsverstärkers 22 und mit dem nichtinvertierenden Eingang des Operationsverstärkers 23 verbunden. Die Steuerspannung $U_{St}$ zur Steuerung des Laststroms liegt am nichtinvertierenden Eingang des Operationsverstärkers 22 und über eine Invertierstufe 26 am invertierenden Eingang des Operationsverstärkers 23. Der Ausgang des Operationsverstärkers 22 ist mit einem Eingang 13b des UND-Gatters 13 in der Verriegelungsstufe B und über einen Inverter 24 mit einem Eingang 14b des UND-Gatters 14 verbunden. Der Ausgang des Operationsverstärkers 23 ist mit einem Eingang 15b des UND-Gatters 15 und über einen Inverter 25 mit einem Eingang 16b des UND-Gatters 16 verbunden.

Zur Erfassung der Polarität der Steuerspannung $U_{St}$ wird diese an den nichtinvertierenden Eingang des Operationsverstärkers 17 angelegt, dessen invertierender Eingang an Bezugspotential liegt. Der Operationsverstärker 17 wird im übersteuerten Bereich betrieben, so daß jeder positive Wert der Steuerspannung $U_{St}$ zu einer logischen "1" am Ausgang führt. Der Ausgang des Operationsverstärkers 17 ist mit dem Einschaltverzögerungsglied 18 und über einen Inverter 20 mit dem Einschaltverzögerungsglied 19 verbunden. Jedes Einschaltverzögerungsglied 18 bzw. 19 enthält eine Reihenschaltung von Widerstand 18c bzw. 19c und Kondensator 18b bzw. 19b, die jeweils zwischen einem positiven Potential P und dem Bezugspotential der Schaltungsanordnung liegen. Der Eingang
jedes Verzögerungsgliedes 18 bzw. 19 ist über eine
Diode 18a bzw. 19a mit dem Verbindungspunkt zwischen
Widerstand 18c bzw. 19c und Kondensator 18b bzw. 19b
verbunden. Dabei ist die Kathode jeder Diode 18a bzw.
19a dem Eingang zugewandt. Der Verbindungspunkt zwischen
Widerstand 18c bzw. 19c und Kondensator 18b bzw. 19b
ist über je einen Schmitt-Trigger 18d bzw. 19d mit dem
Ausgang des Einschaltverzögerungsgliedes 18 bzw. 19 verbunden. Das Ausgangssignal des Einschaltverzögerungsgliedes 18 wird einem Eingang 13a des UND-Gatters 13
sowie einem Eingang 15a des UND-Gatters 15 zugeführt.
Das Ausgangssignal des Einschaltverzögerungsgliedes 19
wird einem Eingang 14a des UND-Gatters 14 sowie einem
Eingang 16a des UND-Gatters 16 zugeführt.

Der Ausgang des UND-Gatters 13 ist der Basis 1a des
Transistors 1, der Ausgang des UND-Gatters 14 der Basis
2a des Transistors 2, der Ausgang des UND-Gatters 15
der Basis 3a des Transistors 3 und der Ausgang des UND-
Gatters 16 der Basis 4a des Transistors 4 zugeführt. Dabei ist zur Potentialtrennung zwischen den UND-Gattern
13 bis 16 und den Basisanschlüssen der Transistoren
1 bis 4 im Ausführungsbeispiel jeweils ein Impulsübertrager 13c bis 16c angeordnet.

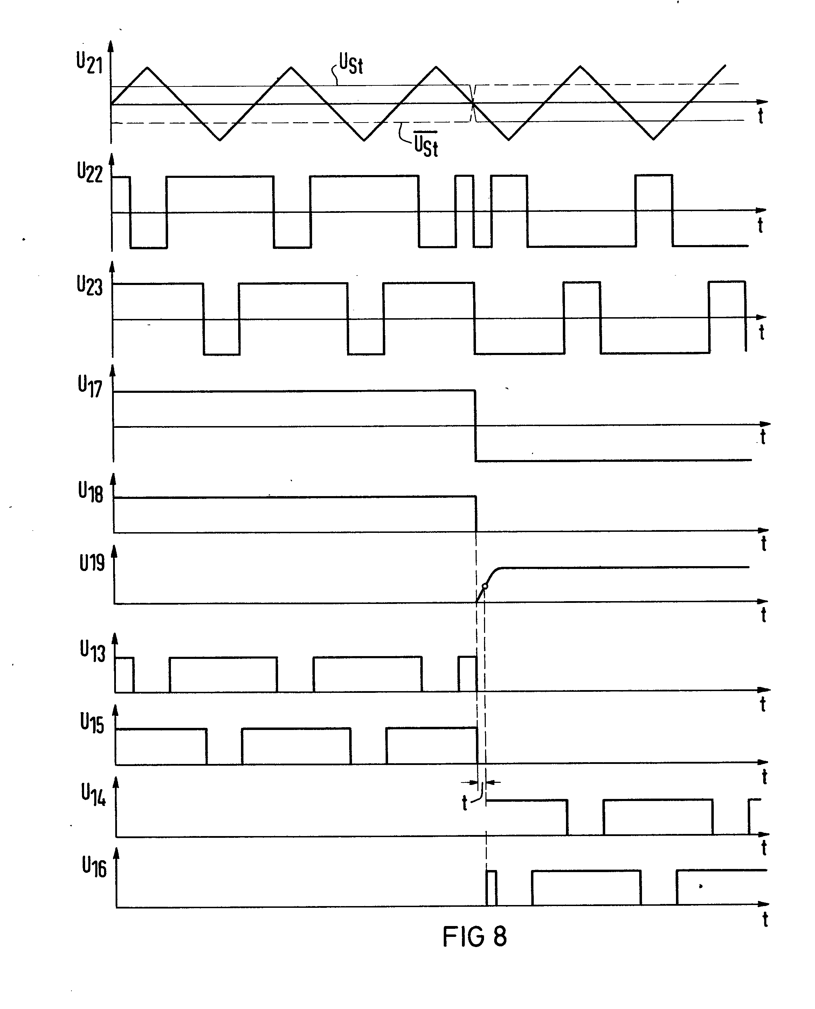

Die Funktionsweise der Schaltung nach Fig. 7 wird im
folgenden anhand der Impulsdiagramme nach Fig. 8 erläutert. Dabei ist zunächst der Verlauf der Ausgangsspannung $U_{21}$ des Dreieckgenerators 21 in Verbindung mit
der Steuerspannung $U_{St}$ und - gestrichelt - der invertierten Steuerspannung $U_{St}$ dargestellt. Durch Vergleich
der Dreiecksspannung $U_{21}$ mit der Steuerspannung $U_{St}$ in
den Operationsverstärkern 22 und 23 ergeben sich die dargestellten Spannungsverläufe für die Ausgangsspannungen $U_{22}$ und $U_{23}$ der Operationsverstärker 22 und 23. Die Schaltung ist so gewählt, daß $U_{22}$ "+1" ist, wenn die Dreieckspannung $U_{21}$ unter der Steuerspannung $U_{St}$ liegt und daß die Spannung $U_{22}$ "-1" ist, wenn die Spannung $U_{21}$ über der Steuerspannung $U_{St}$ liegt. Die Spannung $U_{23}$ ist "+1", wenn die Spannung $U_{21}$ über der invertierten Steuerspannung $U_{St}$ liegt und "-1", wenn sie unterhalb der invertierten Steuerspannung $U_{St}$ liegt.

Wie ein Vergleich der Spannungsdiagramme für die Spannungen $U_{22}$ und $U_{23}$ mit den Spannungsdiagrammen nach Fig. 2 zeigt, sind die Spannungen $U_{22}$ und $U_{23}$ bei positiver Steuerspannung $U_{St}$ direkt, bei negativer Steuerspannung $U_{St}$ nach Inversion zur Ansteuerung der Transistoren 1 bis 4 verwendbar. Diese Inversion wird durch die Inverter 24 und 25 in der Schaltung nach Fig. 7 erreicht.

Ein Vergleich der Spannungsdiagramme für die Spannungen $U_{21}$ bis $U_{23}$ nach Fig. 8 zeigt auch, daß die Breite der Ansteuerimpulse, d. h. die Einschaltdauer der Transistoren und damit auch der Laststrom mit steigender Steuerspannung $U_{St}$ zunimmt.

Um eine Ansteuerung der Transistoren 1 bis 4 nach Fig. 2 zu erreichen, muß lediglich noch dafür gesorgt werden, daß die Ansteuerimpulse bei positiver Steuerspannung $U_{St}$ den Transistoren 1 und 3, bei negativer Steuerspannung $U_{St}$ den Transistoren 2 und 4 zugeführt werden. Dazu ist die Polaritätserfassungsstufe mit dem Operationsverstärker 17 vorgesehen, dessen Ausgangsspannung $U_{17}$ bei positiver Steuerspannung $U_{St}$ den Wert "+1", bei negativer Steuerspannung $U_{St}$ den Wert "-1" aufweist. Die Spannung $U_{17}$ wird den UND-Gattern 13 und 15 sowie nach Inversion im Inverter 20 den UND-Gattern 14 und 16 zugeführt, so daß bei positiver Steuerspannung $U_{St}$ die Ansteuerimpulse für die Transistoren 1 und 3, bei negativer Steuerspannung die Ansteuerimpulse für die Transistoren 2 und 4 freigegeben werden. Um zu verhindern, daß die Transistoren 1 und 2 oder 3 und 4 gleichzeitig eingeschaltet sind, was zu einem Brückenkurzschluß führen würde, muß bei Polaritätswechsel der Steuerspannung $U_{St}$ eine Pausenzeit t eingehalten werden, in der alle Ansteuerimpulse gesperrt sind. Diese Pausenzeit t wird durch die Einschaltverzögerungsglieder 18 und 19 erzeugt. Wenn die Spannung $U_{17}$ von "+1" nach "-1" wechselt, so kann sich der über den Widerstand 18c aufgeladene Kondensator 18b sehr schnell entladen, so daß das Ausgangssignal des Einschaltverzögerungsgliedes 18 nahezu unverzögert auf "0" geht und die Ansteuerimpulse für die Transistoren 1 und 3 gesperrt werden. Gleichzeitig wird bei Wechsel der Spannung $U_{17}$ von "+1" nach "-1" der Kondensator 19b über den Widerstand 19c aufgeladen, da am Ausgang des Inverters 20 positives Potential ansteht und somit kein Strom über die Diode 19a abfließen kann. Sobald die Spannung am Kondensator 19b einen bestimmten Wert erreicht hat, werden über die UND-Gatter 14 und 16 die Ansteuerimpulse für die Transistoren 2 und 4 freigegeben. Um einen eindeutigen Schaltzeitpunkt zu erzielen, enthalten die Einschaltverzögerungsglieder 18 und 19 am Ausgang jeweils einen Schmitt-Trigger 18d und 19d. Wie die Impulsdiagramme für die Spannungen U13 bis U16 zeigen, werden also die Steuerimpulse für die Transistoren 1 und 3 bei Polaritätswechsel der Steuerspannung $U_{St}$ sofort unterbrochen, während die Steuerimpulse $U_{14}$ und $U_{16}$ für die Transistoren 2 und 4 erst nach der Verzögerungszeit t freigegeben werden, so daß kein Brückenkurzschluß auftreten kann. Der Wechsel der Ansteuerung der Transistoren 1 bis 4 bei Polaritätswechsel der Steuerspannung $U_{St}$ von " - " nach " + " vollzieht

sich analog zum dargestellten Ablauf.

Mit der beschriebenen Schaltung kann das Impulsraster zur Ansteuerung der Transistoren 1 bis 4 nach Fig. 2 auf einfache Weise erzeugt werden. Die Phasenlage und Dauer der Ansteuerimpulse hängt von der Ausgangsspannung des Dreieckgenerators 21 ab, die ohne besonderen Aufwand mit großer Genauigkeit und guter Symmetrie erzeugt werden kann.

Patentansprüche

1. Verfahren zur Pulsbreitensteuerung eines Gleichstrom-Umkehrstellers mit vier elektronischen Schaltern in Brückenschaltung zur Versorgung einer in der Brückendiagonalen liegenden ohmisch-induktiven Last, wobei bei jeder Richtung des Laststromes jeweils zwei in der Brückenschaltung diagonal gegenüberliegende elektronische Schalter periodisch getaktet werden, d a d u r c h g e k e n n z e i c h n e t, daß die diagonal gegenüberliegenden elektronischen Schalter (1, 3; 2, 4) zeitlich versetzt getaktet werden.

2. Schaltungsanordnung zur Durchführung eines Verfahrens nach Anspruch 1 mit vier elektronischen Schaltern in Brückenschaltung und einer in der Brückendiagonalen angeordneten ohmisch-induktiven Last, bei der jeder elektronische Schalter von einer Freilaufdiode überbrückt ist, bei der die Pulsbreitensteuerung durch eine Ansteuereinrichtung in Abhängigkeit von einer Steuerspannung erfolgt, bei der bei positiver Steuerspannung der erste und der zu diesem in der Brückenschaltung diagonal angeordnete dritte elektronische Schalter und bei negativer Steuerspannung der zweite und der vierte elektronische Schalter periodisch getaktet werden und bei der die nicht getakteten elektronischen Schalter gesperrt sind, d a d u r c h g e k e n n z e i c h - n e t, daß zwischen Ansteuereinrichtung (A) und jedem elektronischen Schalter (1, 2, 3, 4) je eine Verriegelungsstufe (13, 14, 15, 16) angeordnet ist, daß die Steuerspannung ($U_{St}$) dem Eingang einer Polaritätserfassungsstufe (17) zugeführt ist, die bei positiver Steuerspannung ($U_{St}$) ein Signal abgibt und daß die Polaritätserfassungsstufe (17) über ein erstes Einschalt-Verzögerungsglied (18) mit den Verriegelungseingängen Sid 2 Kgm / 08.06.1979 (13a, 15a) der Verriegelungsstufen (13, 15) des ersten und dritten elektronischen Schalters (1, 3) und über eine Invertierstufe (20) und ein zweites Einschalt-Verzögerungsglied (19) mit den Verriegelungseingängen (14a, 16a) der Verriegelungsstufen (14, 16) des zweiten und vierten elektronischen Schalters (2, 4) verbunden ist.

3. Schaltungsanordnung nach Anspruch 2, d a d u r c h  g e k e n n z e i c h n e t, daß jede Verriegelungsstufe (13, 14, 15, 16) ein UND-Gatter ist.

4. Schaltungsanordnung nach Anspruch 2 oder 3, d a - d u r c h  g e k e n n z e i c h n e t, daß die Polaritätserfassungsstufe (17) ein im Übersteuerungsbereich betriebener Operationsverstärker ist.

5. Schaltungsanordnung nach einem der Ansprüche 2 bis 4, d a d u r c h  g e k e n n z e i c h n e t, daß jedes Einschaltverzögerungsglied (18, 19) zwischen seinem Eingang und dem Bezugspotential der Schaltungsanordnung die Reihenschaltung einer Diode (18a, 19a) und eines Kondensators (18b, 19b) aufweist, wobei die Diode (18a, 19a) bei positivem Eingangssignal in Sperrichtung gepolt ist, und daß der Verbindungspunkt zwischen Diode (18a, 19a) und Kondensator (18b, 19b), der zugleich den Ausgang des Verzögerungsgliedes (18, 19) darstellt, über einen Widerstand (18c, 19c) mit der Versorgungsspannung (P) verbunden ist.

6. Schaltungsanordnung nach einem der Ansprüche 2 bis 5, d a d u r c h  g e k e n n z e i c h n e t, daß einem Dreieckgenerator (21) zwei Vergleicherstufen (22, 23) nachgeschaltet sind, denen die Steuerspannung ($U_{st}$) als Referenzspannung zugeführt ist, wobei die erste Vergleicherstufe (22) ein Signal abgibt, wenn die Ausgangsspannung des Dreieckgenerators (21) unter der Steuerspannung ($U_{St}$) liegt und die zweite Vergleicherstufe (23) ein Signal abgibt, wenn die Ausgangsspannung des Dreieckgenerators (21) über der invertierten Steuerspannung ($U_{St}$) liegt, daß der Ausgang der ersten Vergleicherstufe (22) mit dem Signaleingang der Verriegelungsstufe (13) des ersten elektronischen Schalters (1) und über ein Invertierglied (24) mit dem Signaleingang der Verriegelungsstufe (14) des zweiten elektronischen Schalters (2) verbunden ist und daß der Ausgang der zweiten Vergleicherstufe (23) mit dem Signaleingang der Verriegelungsstufe (15) des dritten elektronischen Schalters (3) und über ein Invertierglied (25) mit dem Signaleingang der Verriegelungsstufe (16) des vierten elektronischen Schalters (4) verbunden ist.

7. Schaltungsanordnung nach Anspruch 6, d a d u r c h  g e k e n n z e i c h n e t , daß die erste und zweite Vergleicherstufe (22, 23) ein erster und zweiter im Übersteuerungsbereich betriebener Operationsverstärker sind, wobei dem nicht invertierenden Eingang des Operationsverstärkers (22) die Steuerspannung ($U_{St}$), dem invertierenden Eingang des ersten Operationsverstärkers (22) die Ausgangsspannung des Dreieckgenerators (21), dem nicht invertierenden Eingang des zweiten Operationsverstärkers (23) die Ausgangsspannung des Dreieckgenerators (21) und dem invertierenden Eingang des zweiten Operationsverstärkers (23) die invertierende Steuerspannung ($U_{St}$) zugeführt ist.

FIG 1

FIG 2

FIG 4

FIG 5

FIG 3

FIG 6

FIG 7

FIG 8

0024300
Nummer der Anmeldung

Europäisches
Patentamt

**EUROPÄISCHER RECHERCHENBERICHT**

EP 80 10 4108.8

| | **EINSCHLÄGIGE DOKUMENTE** | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| X | CH - A - 504 134 (GENERAL ELECTRIC CO.) <br> * gesamte Schrift * <br> -- | 1-7 | H 02 P 7/28 |
| | GB - A - 1 476 141 (GENERAL ELECTRIC CO.) <br> * Seite 4, Zeile 80 und ff.; <br> Fig. 2, 8 * <br> -- | 1-7 | |
| | DE - A1 - 2 558 571 (LICENTIA) <br> * Seite 15, letzter Absatz und ff. * <br> -- | 1 | **RECHERCHIERTE SACHGEBIETE (Int. Cl.3)** |
| | GB - A - 1 476 142 (GENERAL ELECTRIC CO.) <br> * gesamte Schrift * <br> -- | 1-5 | H 02 M 3/155 <br> H 02 P 5/00 <br> H 02 P 7/00 <br> H 02 P 13/32 |
| A | DE - A - 1 513 181 (HONEYWELL) <br> ---- | | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X  Der vorliegende Recherchenbericht wurde für alle Patentansprüche erstellt.

| Recherchenort | Abschlußdatum der Recherche | Prüfer |
|---|---|---|
| Berlin | 07-11-1980 | GESSNER |

EPA form 1503.1  06.78